(19) Europäisches Patentamt

European Patent Office

Office européen des brevets

(11) EP 0 974 115 B1

(12) EUROPEAN PATENT SPECIFICATION

(45) Date of publication and mention
of the grant of the patent:
**29.01.2003 Bulletin 2003/05**

(51) Int Cl.⁷: **G06F 17/60**

(86) International application number:
**PCT/NL98/00198**

(21) Application number: **98912818.6**

(22) Date of filing: **07.04.1998**

(87) International publication number:
**WO 98/045796 (15.10.1998 Gazette 1998/41)**

(54) **SYSTEM AND METHOD FOR CALCULATION OF CONTROLLING PARAMETERS FOR A COMPUTER BASED INVENTORY MANAGEMENT SYSTEM**

SYSTEM UND VERFAHREN ZUR BERECHNUNG DER STEUERPARAMETER FÜR EIN RECHNERGESTUTZTES LAGERHALTUNGSSYSTEM

SYSTEME ET PROCEDE DE CALCUL DE PARAMETRES DE COMMANDE DESTINES A UN SYSTEME DE GESTION D'INVENTAIRE ASSISTE PAR ORDINATEUR

(84) Designated Contracting States:
**AT BE CH DE DK ES FI FR GB GR IE IT LI PT SE**

(30) Priority: **07.04.1997 NL 1005745**

(43) Date of publication of application:
**26.01.2000 Bulletin 2000/04**

(73) Proprietor: **Krever, Maarten**
**2312 XB Leiden (NL)**

(72) Inventor: **Krever, Maarten**
**2312 XB Leiden (NL)**

(74) Representative: **de Bruijn, Leendert C. et al**
**Nederlandsch Octrooibureau**
**P.O. Box 29720**
**2502 LS Den Haag (NL)**

(56) References cited:
**EP-A- 0 733 986**    **US-A- 5 128 861**
**US-A- 5 287 267**    **US-A- 5 459 656**

## Description

### Technical Field

This invention relates to inventory management systems and the parameters used therein. In particular the invention deals with the calculation of optimum reorder parameters, optimizing service levels as well as minimizing cost.

Inventory management systems using suitably programmed computers are not unknown as such. As an example may be cited the program system TRITON as supplied by Baan BV, The Netherlands. This program runs on a computer consisting of at least one processor, memory, input and output.

A theoretical exposition of the functionality of such a system can be found in R.H. Ballou, Business Logistics Management, Prentice Hall Inc., 1992 or E.A. Silver and R. Peterson, Decision Systems for Inventory Management and Production Planning, John Wiley & Sons, Inc., 1985

### Background to the invention

The main aim of inventory management systems is to administrate and maintain a stock of items, such that ideally any order for any item can be filled from stock, while at the same time the stock of items is kept as low as is possible. Constraints such as maximum investment- and minimum service levels must be maintained. Excess of stock should be avoided. In other words, good inventory management involves providing a high product availability or item service level at a reasonable cost.

The service level is defined as the ratio between the number of demands directly served from stock and the total number of demands or, alternatively, as ratio of served quantity and the total quantity demanded.

$$SL = \text{Served quantity / Total quantity}$$

The service level is a direct consequence of the, in time on the right moment, reordering process for the items in stock. For each item, dependent on the particular supplier of the item, an estimate of the lead time L may be derived. In order to enable demands to be served from stock during the lead time L, items have to be reordered when a sufficient stock quantity, but no more than that, is still available. This way the demand during the lead time L can be satisfied.

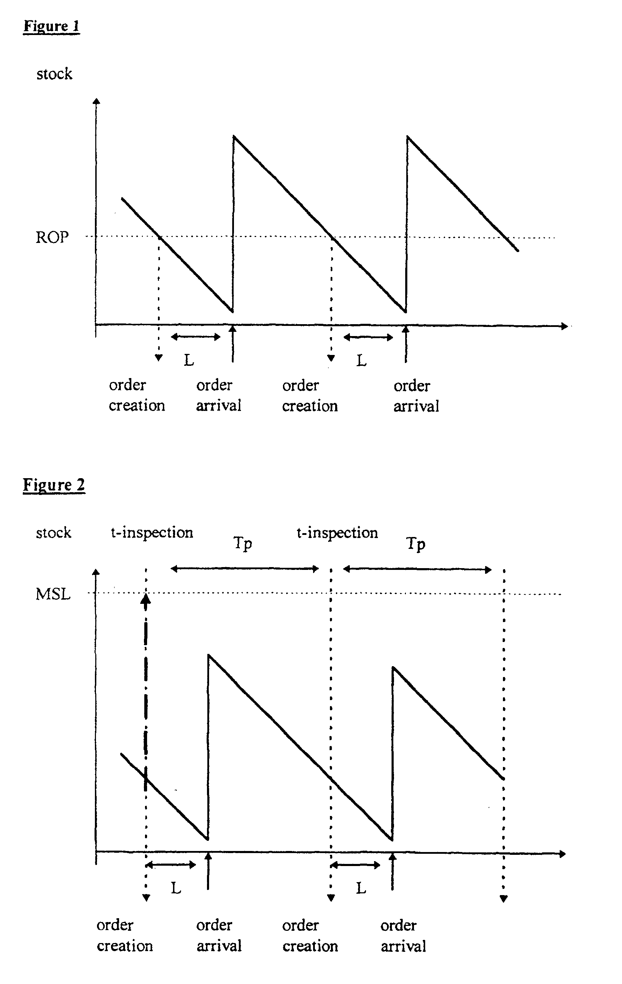

To this end items are reordered when the stock quantity reaches a certain level, the reorder point ROP (see figure 1). This reorder point is chosen to enable demands during the lead time to be served, with a certain pre-defined desired service level SLcon.

Another way of managing the stock consists of inspecting the quantity in stock at fixed time intervals (see figure 2.). Reordering occurs to a certain predefined, calculated maximum stock level MSL aimed at covering the demand for items during the time intervals between the inspections, with a certain pre-defined desired service level SLcon.

Both methods may be used as well, if the items are not available from a supplier, but are produced in a batch-wise production with a limited production time and production setup time.

Management methods are known, however they differ from the invention in their purpose, their implementation and their mathematical basis.

US Patent 5,287,267, Feb. 15, 1994

This patent describes a method of controlling an inventory of parts, in particular components needed for the fabrication of products, the same part sometimes being used in a plurality of products, where the actual demand for the products is unknown. Based on estimated forecasts and confidence intervals for the different products, and bills of material, which express the quantities of the parts which are needed as components for each of the products, estimates of the total number of parts required are obtained.

The optimum to an objective aimed at minimization of excess stock, is found using a standard iterative procedure where the solution is found by use of a parametric search on the value of a Lagrange multiplier.

US Patent 5,459,656, Oct.17,1995

This patent describes a method of managing an inventory of fast moving consumables, predicting near future consumption by the use of statistics based on the recent past, sampling daily consumption patterns, differentiated by daytypes. The method is heuristic and uses input and control by human expert knowledge.

Patent EP 0 733 986 A2, Sept. 25, 1996

This patent describes a method of optimizing an inventory, based on a number of different criteria, such as a selected inventory investment or a service level constraint. A number of initial parameters such as forecasts are predefined. A level of an inventory investment or an inventory level constraint is found by marginal analysis. Gradients or slopes of constraint functions are used to improve the fit of an ensemble of parameters for the items concerned, to predefined service levels or investment constraints. Step-wise improved (on average) values for the ensemble can be obtained.

This method is a refinement method for an initially known ensemble of parameters where optimal individual results are not guaranteed.

**Aim of the invention**

Current methods of calculating the reorder point and maximum stock level MSL can be improved, in particular by improving the accuracy of the estimates of the variance of the consumption over a certain period of time. A mathematical method avoiding sampling by periods of time, deriving the solution by solving a mathematical expression, using the historical data directly, yields the information required. The invention indicates how this aim can be realized.

**Short description of the invention**

In agreement with the aim given the present invention provides a system and method to calculate optimal inventory control parameters for the use in a computer based inventory management system, which comprises at least one processor, memory, input and output. The system consists of a computer program, which calculates the moment of reordering as well as the quantity to reorder. The calculation is characterized by the use of moments of the single demand probability functions P(Q) for each item in the inventory to calculate the reorder point ROP and reorder quantity or the maximum stock level MSL using the formulae

$$E(R) = A1 \times E(L) \times E(Q)$$

And

$$Var(R) = A2 \times E(L) \times Var(Q) + A3 \times E(L) \times E(Q)^2 + A4^2 \times E(Q)^2 \times Var(L)$$

Where

| | |
|---|---|
| Aj | parameter depending on the distribution function of Tj |
| Tj | Time elapsed between the demands j-1 and j. |
| L | The lead time, reorder period or production time |
| R | Consumption in units over L |
| Q(i) | Quantity in the single demand i during lead time |
| E(R) | Expected consumption of item over L |
| E(L) | Expected value of L |
| E(Q) | Expected value for Q for any request i |
| Var(R) | Variance of R |
| Var(Q) | Variance of Q |
| Var(L) | Variance of L |

An alternative embodiment of the system comprises using the following formulae

$$P(R) = \sum_{j=0}^{n} wj \times Pj(R)$$

Where

| | |
|---|---|
| P(R) | the probability distribution of R |
| P(Q) | the probability distribution of Q for any request i |
| Pj(R) | the jth selfconvolution of P(Q) (the joint probability for the total quantity of j requests) |
| wj | the statistical weight of the corresponding joint probability distribution for 1 .... n simultaneous demands in lead time L. |

The reorder quantity is calculated from:

$$SL(ROP) = \int_{0}^{ROP} P(R)\, dR$$

In yet another alternative embodiment the following formula is applied

$$SL(ROP) = \sum_{j=1}^{n} wj \times Fj(ROP)$$

Where

SL(ROP)    Service level as function of the ROP
Fj(ROP)    The cumulative distribution function of Rj

In still another alternative embodiment a completely general formula is applied:

$$L(R) = \sum_{j=1}^{n} wj \times [L(Q)]^{j}$$

Where

L(Q)    the Fourier transform of P(Q)
L(R)    the Fourier transform of P(R)

P(R) is found by back-transforming the result just once.

$$P(R) = \text{Fourier transform of } ( L(R) )$$

From this expression ROP, given a desired service level SLcon, can be obtained directly.

**Brief description of the drawings**

Figure 1 depicts the Q-system. If the stock reaches the reorder point ROP, an order is created. The reorder point ROP is calculated in such a way as to enable serving demands for items during the lead time L, with a certain pre-defined desired service level SLcon.

Figure 2 depicts the fixed order cycle method, or the P-system, where on periodic time-intervals Tp an order is created. At periodic intervals, the quantity in stock is reviewed, and an order is created to re-supply the stock. The maximum stock level MSL enables demands to be served between inspections to a certain predefined service level SLcon. The lead time L is taken into account as well.

Figure 3 depicts the relation between the stock, the lead time and variability of the lead time, and demand and variability in demand. The in reality step-wise decrease of the inventory stock is depicted as straight lines, the slope representing the total quantity demanded in the lead time.

Figure 4 depicts a probability distribution which can be used to determine the reorder point.

Figure 5 depicts two ways of representing the historical consumption over time of an item: First, each demand for an item is represented by a bar, the length of which is proportional to the quantity requested. Alternatively, the historical consumption is represented by sampling the total quantity demanded over a specific period of time.

Figure 6 depicts two different demand patterns A and B, each are represented in two ways according to figure 5, as single demanded quantities representations A1 and B1, and as the demanded quantities sampled over periods, A2 and B2.

Figure 7 depicts the same demand pattern A, in two ways A2 and A3: As sampled by periods using the same sampling period intervals, the sampling period intervals of A3 have been shifted with respect to A2.

Figure 8 depicts a number of graphs clarifying the detailed description of the invention.

Figure 9 depicts a diagram illustrating an aspect in the detailed description of the invention.

## Detailed description of the invention

Using the values of the parameters calculated by the control system according to the invention, allows the inventory management system to optimize the service levels while minimizing the stock inventory and avoiding excess stock. The logistical parameters calculated by the system are:

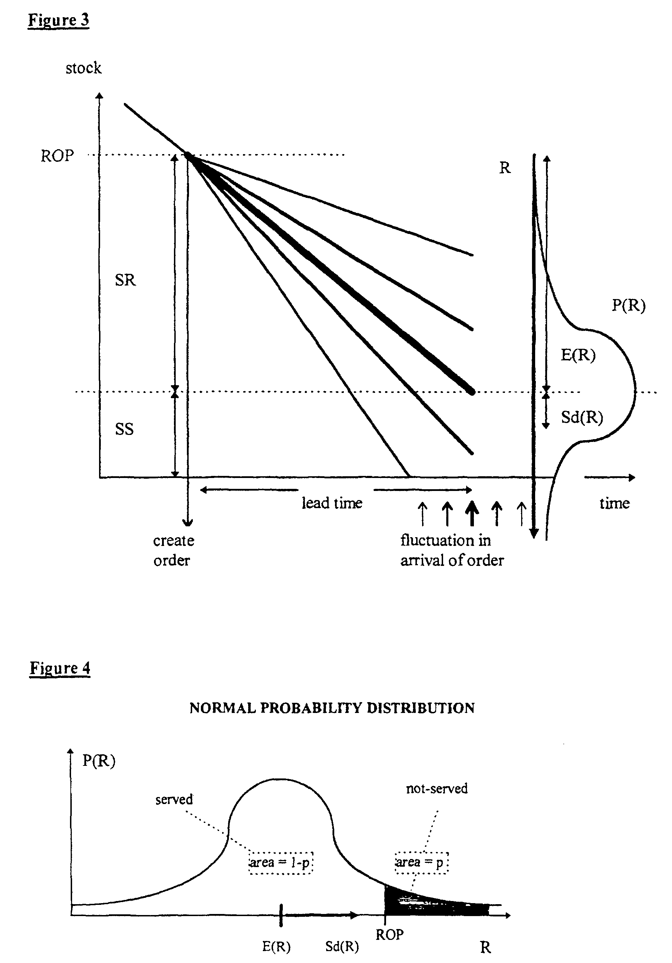

> For the Q-system (R.H. Ballou, Business Logistics Management, Prentice Hall Inc., 1992) the reorder point and the reorder quantity.
>
> For the P-system (R.H. Ballou) or fixed order cycle method, the order to level or maximum stock level MSL and the periodic review period Tp.
>
> For both Q-system and P-system the break quantity or exceptional demanded quantity threshold and lead times are calculated as well.
>
> Currently, the reorder point is calculated as expected demand E(R), the so-called stock reserve SR, to which a quantity is added, the so-called safety stock SS, to cover larger than expected demand, caused by the variability in demand and lead times. See figure 3.
>
> The reorder point ROP for Q-systems and order to level MSL for P-systems are calculated in exactly the same manner, the only difference being that ROP depends on the lead time L, whereas MSL depends on Tp + L. Therefore the equations below are given for ROP only.
>
> Similar calculations are equally applicable if the items are not re-supplied by ordering from a supplier, but are produced in batch-wise production with a limited production time and production setup time.
>
> Current methods of determining reorder points generally use the following mechanism to estimate ROP: The probability distribution of P(R) is assumed to be a normal distribution (Figure 4). If demand R > ROP, the demand will not be served. This constitutes the area or fraction p. The estimate of ROP is given by

$$ROP = E(R) + Z \times Sd(R)$$

Where Z is given by Z = G-1(1-p) resulting in a service level s = (1-p) x 100% (G is the standard normal distribution function).

Sd(R) is estimated by several methods, the one most commonly used is based on the mean weighted average absolute difference of the consumption and forecast over a number of historical periods:

$$MAD = \sum_{i=1}^{n} wi \times | \text{Forecast (period i) - Real demand (period i)} |$$

Where the weights wi correspond generally to exponential smoothing, the factor 1.25 is used to convert the mean-absolute-deviation-value into the theoretical desired square-root-mean-squared-deviation

$$Sd(R) = 1.25 \times MAD$$

The value of MAD should be corrected for the difference between L and the forecast time on which MAD is based.

A second method is based on an estimation of Sd(R) by direct estimation of the variance of the demand sampled in periodic intervals, to which an additional term is added, allowing for the variance of the lead time.

$$Var(R) = E(L) \times Var(D) + [E(D)]^2 \times Var(L)$$

Both of these methods are based on sampling the total quantity demanded D by periodic intervals only, rather than using the statistics based on individual demands. In this context terms such as "variability in demand" and "variance of demands" are not uncommon, however, this does not imply the use of individual demand statistics.

Note that sampling of demands in intervals actually leads to loss of information:

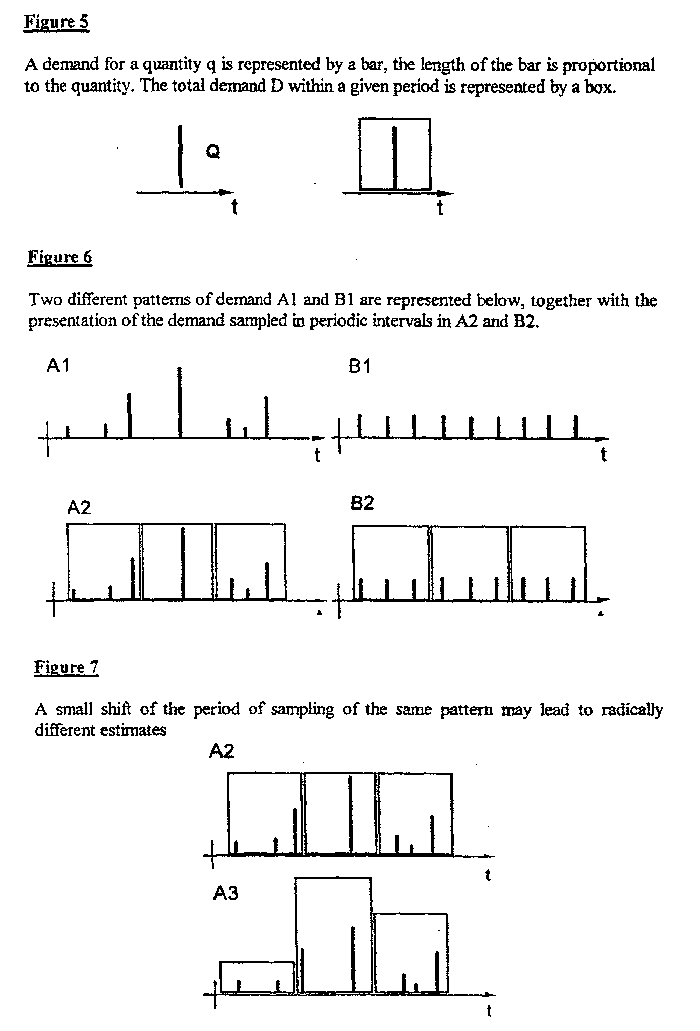

In figure 5, a bar represents a demand for a quantity q, the length of the bar is proportional to the quantity. A box represents the total demand D within a given period.

Two different patterns of demand are represented in figure 6 in pattern A1 and B1 respectively, together with the presentation of the same demand patterns sampled in periodic intervals in A2 and B2.

Clearly, sampling in a periodic way leads to the false conclusion that the non-identical patterns shown are in fact identical.

Moreover, as is depicted in figure 7, small changes in - or shifts of the period of sampling of the same pattern may lead to radically different estimates for the variance of the distribution as can be seen from A2 and A3, both periodic presentations of the same demand pattern A1. (Note that where the variance is highly dependent on the way the pattern is sampled, changing the sampling or shifting the presentation does not influence the mean or average expected quantity for a sampling period.)

Only the service level during lead time is important, the service level outside lead time is always at least equal to this. In the context of the invention, ROP is estimated from historic data while avoiding the problems mentioned above.

### A rigorous mathematical formalism

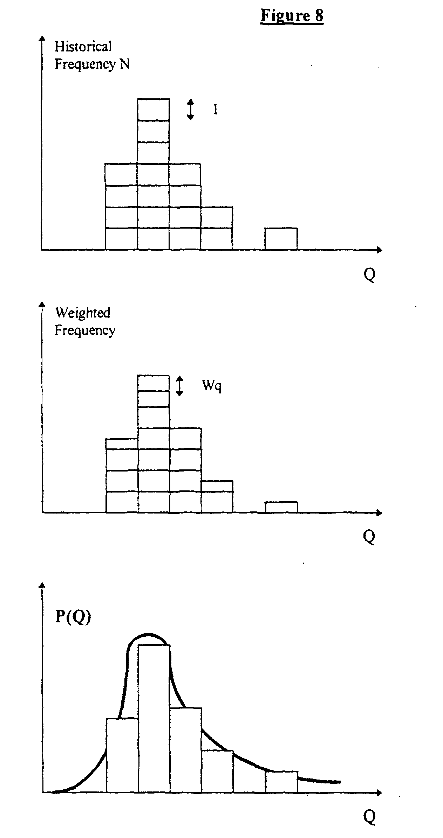

P(R) is derived from P(Q), where P(Q) is the empirical probability distribution, based on historical frequency data (figure 8.) which may be time-weighted using an empirical weighting scheme wq, down weighting inaccurate data and data obtained from a long time in the past.

If the weighted frequency distribution is used, the sum of the corresponding weights is taken for all demanded quantities pertaining to a certain interval, instead of the number of times a demanded quantity pertains to the same interval.

The historical frequency distribution is obtained by sampling Qi on a number of intervals q1, q2 ... qm and counting the frequency of occurrence for each interval.

$$F(qm) = frequency\ Qi\ in\ interval\ qm = sum\ of\ 1\ (Qi\ in\ interval\ qm)$$

The weighted frequency distribution is obtained by adding the to Qi corresponding weight wq instead of adding 1, when summing the number of occurrences for each interval.

$$Fw(qm) = sum\ of\ wq\ (Qi\ in\ interval\ qm)$$

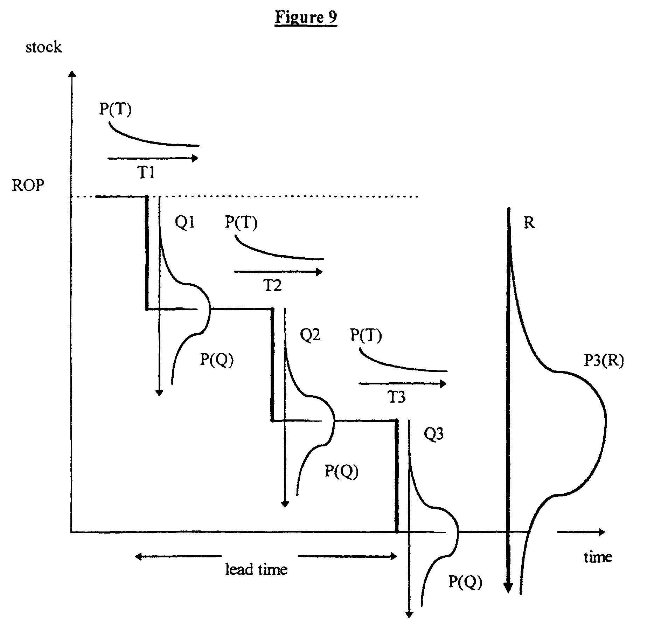

Given a number of demands, for instance 3 (figure 9.), the joint probability distribution P3(R) for the total consumption R of 3 demands, can be constructed from the single demand probability distribution P(Q).

The demand in the lead time, R, may arise from different numbers of demands j, each with a certain probability of occurring wj, and a probability distribution Pj(R) for the total quantity of the j demands.

Therefore P(R) is derived as a series,

$$P(R) = \sum_{j=0}^{n} wj \times Pj(R) \qquad \text{(formula 1)}$$

Where Pj(R) is the jth selfconvolution of P(Q) and wj is the statistical weight of the corresponding joint probability function for 1 ... n simultaneous demands in the lead time L.
In practice values of n>100 need not be considered, as then the alternative approach given below is valid.
Under the assumption of the distribution of Ti being known - e.g. an exponential or truncated normal or Weibull, etc. - the coefficients wj can be calculated directly. This calculation of the coefficients can be modified to include the function P(L).
In the case of the distribution of Ti being exponential, for wj a Poisson distribution is the result, with a mean demand number density A equal to the expected number of demands during L divided by L. Calculation of P(R) is then straightforward if the functions Pj are known.
The functions Pj are not easily obtained directly, however estimates of sufficient accuracy of these convolutions are obtained by Fourier transformation of P(Q) and back-transforming the jth power of the transform obtained. However, P(R) may be obtained directly by first summing over j the jth powers of the transform of P(Q),

$$L(R) = \sum_{j=1}^{n} wj \times [L(Q)]^{j} \qquad \text{(formula 2)}$$

using the weights wj, and back-transforming the result just once.

$$P(R) = \text{Fourier transform } ( L(R) ) \qquad \text{(formula 3)}$$

From this expression, ROP, given a desired service level SLcon, can be calculated easily. The reorder quantity is now calculated in a conventional manner.

$$SL(ROP) = \int_{0}^{ROP} P(R)\, dR \qquad \text{(formula 4)}$$

In order to improve the accuracy and avoid series termination effects in Fourier space, the Fourier-transform L(Q) can be multiplied with the, in the reciprocal space defined, weighting factor wL.

$$L(R) = \sum_{j=1}^{n} wj \times [ wL \times L(Q)]^{j} \qquad \text{(formula 2B)}$$

Alternatively, for certain probability distributions of P(Q), such as a normal or a gamma distribution, Pj(R) can be found analytically for all values of j. The ROP can be calculated using formula 4 directly or from the cumulative distribution functions Fj of Pj(R) in formula 5.

$$SL(ROP) = \sum_{j=1}^{n} wj \times Fj(ROP) \qquad \text{(formula 5)}$$

If the number of demands during lead time is sufficiently large, P(R) can be considered to be a normal distribution. In this case P(R) is fully defined by its mean value and variance. The mean may be obtained from

$$E(R) = A \times E(L) \times E(Q) \qquad \text{(formula 6)}$$

And the variance may be obtained from

$$Var(R) = A \times E(L) \times Var(Q) + A \times E(L) \times E(Q)^2 + A^2 \times E(Q)^2 \times Var(L) \qquad \text{(formula 7)}$$

The advantage is obvious in terms of speed and efficiency. However, it must be stressed that this approach is only valid if de number of demands is high.
Note that formula 7 comprises the (first and second moment, mean and variance) moments of the single demanded quantity probability distribution. The E(Q), Var(Q) may be time-weighted using an empirical weighting scheme wq, down weighting inaccurate data and data obtained from sampling a long time in the past.

$$E(Q) = \Sigma \ wq \times Qj \ / \ \Sigma \ wq$$

And

$$Var(Q) = \Sigma \ wq \times (Qj - E(Q))^2 \ / \ \Sigma \ wq$$

If in the Q-system the quantity in stock drops below the reorder point ROP by serving a demand, the calculation does not start at the reorder point ROP but at a point well below the reorder point. In order to compensate for this effect a correction term may be applied to the above mentioned formulae.
Variables used in the description, for each item in the inventory:

MAD       Mean average absolute deviation between forecasted and actual consumption over a number of historical periods
D            Demand rate, total quantity demanded by period
Var(D)     Variance of D
L            The lead time, re-order period or production time
P(L)        Probability distribution function of L
E(L)        Expected value of L
Var(L)      Variance of L
R            Consumption in units over L
P(R)        Probability distribution function of R
E(R)        Expected consumption of item over L
Var(R)      Variance of R
Sd(R)       Standard deviation of R
Tj           Time elapsed between the (j-1)-th and the j-th demand
P(T)        Probability distribution function of Tj
Rj           Consumption in units of j demands over L
Pj(R)       Probability distribution function of Rj
wj           the statistical weight of the corresponding joint probability function Pj(R) for 1...j simultaneous demands

EP 0 974 115 B1

in lead time L.

| | |
|---|---|
| Fj(ROP) | The cumulative distribution function of Rj |
| Q(i) | Quantity in the i-th single demand during lead time |
| wq | Empirical weighting scheme, down weighting inaccurate data |
| P(Q) | Probability distribution function of Q for any i |
| E(Q) | Expected value for Q for any i |
| Var(Q) | Variance of Q |
| A | Mean demand number density |
| L(Q) | Fourier transform of P(Q) |
| L(R) | Fourier transform of P(R) |
| wL | Weighting factor in reciprocal space |
| ROP | Reorder point |
| SL | Service level |
| SL(ROP) | Service level as function of the ROP |
| SLcon | Desired service level |
| Tp | The time between periodic reviews |
| MSL | Order-to-level or maximum-stock-level |

## Claims

1. A control system adapted to perform the calculation of optimal control parameters for use in a computer based inventory management system the control system comprising a computer program designed to calculate the re-order point or the maximum stock level MSL and **characterized by** a calculation using the single demanded quantity distributions (A1, B1) for each item in the inventory in order to determine the reorder point or, depending on the reorder policy, the maximum stock level MSL for periodic reviews.

2. System designed for the calculation of optimal control parameters for use in a computer based inventory management system, according to claim 1, **characterized by** the use of the single demanded quantity distributions for each item in the inventory in order to determine the reorder point or, depending on the re-order policy, the maximum stock level MSL for periodic reviews, using the formulae

$$E(R) = A1 \times E(L) \times E(Q)$$

and

$$Var(R) = A2 \times E(L) \times Var(Q) + A3 \times E(L) \times E(Q)^2 + A4^2 \times E(Q)^2 \times Var(L)$$

where

| | |
|---|---|
| Aj | parameter depending on the distribution function of Tj |
| Tj | Time elapsed between the (j-1)-th and the j-th demand |
| L | The lead time, re-order period or production time |
| R | Consumption in units over L |
| Q(i) | Quantity in the i-th single demand during lead time |
| E(R) | Expected consumption of item over L |
| E(L) | Expected value of L |
| E(Q) | Expected value for Q for any request i |
| Var(R) | Variance of R |
| Var(Q) | Variance of Q |
| Var(L) | Variance of L |

3. System according to claim 2 **characterized in that** the distribution Tj is exponential in which case A1 = A2 = A3 = A4

4. System according to claim 2 or 3 **characterized in that** it uses weights wq to improve the accuracy according

9

$$E(Q) = \Sigma\ wq \times Qj\ /\ \Sigma\ wq$$

and

$$Var(Q) = \Sigma\ wq \times (Qj - E(Q))^2\ /\ \Sigma\ wq$$

**5.** System designed for the calculation of optimal control parameters for use in a computer based inventory management system, according to claim 1, **characterized by** the use of the single demanded quantity distributions for'each item in the inventory in order to determine the reorder point ROP or, depending on the reorder policy, the maximum stock level MSL for periodic reviews, using the following formulae

$$P(R) = \sum_{j=0}^{n} wj \times Pj(R)$$

where

R      consumption in units over the lead time, re-order period or production time
P(R)    the probability function of R
P(Q)    the probability function of quantity Q for any request i
Pj(R)   the jth selfconvolution of P(Q) (the joint probability for the total quantity of j requests)
wj      the statistical weight of the corresponding joint probability function for 1 .... n simultaneous demands in lead time $L_H$

after which the reorder quantity is now calculated as:

$$SL(ROP) = \int_{0}^{ROP} P(R)\ dR$$

**6.** System designed for the calculation of optimal control parameters for use in a computer based inventory management system, according to claim 1, **characterized by** the use of the single demanded quantity distributions for each item in the inventory in order to determine the reorder point ROP or, depending on the reorder policy, the maximum stock level MSL for periodic reviews, using the formulae

$$SL(ROP) = \sum_{j=1}^{n} wj \times Fj(ROP)$$

where

SL(ROP)   Service level as function of the ROP
Fj(ROP)   The cumulative distribution function of Rj.

**7.** System designed for the calculation of optimal control parameters for use in a computer based inventory management system, according to claim 1, **characterized by** the use of the single demanded quantity distribution for each item in the inventory in order to determine the reorder point or, depending on the reorder policy, the maximum stock level MSL for periodic reviews, using the formulae

$$30 \quad L(R) = \sum_{j=1}^{n} wj \times [L(Q)]^{j}$$

where

L(Q)   the Fourier transform of P(Q)
L(R)   the Fourier transform of P(R)

after which P(R) is found back-transforming the result just once:

P(R) = Fourier transform ( L(R) )

whereafter the reorder quantity is calculated as:

$$SL(ROP) = \int_{0}^{ROP} P(R)\, dR.$$

**8.** System designed for the calculation of optimal control parameters for use in a computer based inventory management system, according to claim 7, **characterized by** the use of a weighting factor wL:

$$L(R) = \sum_{j=1}^{n} wj \times [\, wL \times L(Q)]^{j}$$

where

L(Q)   the Fourier transform of P(Q)
L(R)   the Fourier transform of P(R)
wL     weighting-factor in the reciprocal space

after which P(R) is found back-transforming the result just once:

P(R) = Fourier transform (L(R)).

**9.** A control system adapted to perform the calculation of optimal reorder parameters for use in a computer based inventory management system, where the calculation is performed according to the claims 1-8, for a number of factors, categories or domains, like the 4 seasons, the 2 sexes, or a number of age classes

**Patentansprüche**

1. Steuerungssystem, entwickelt für die Berechnung von optimalen Steuerungsparametern zur Verwendung in einem auf einen Computer gegründeten Inventarverwaltungssystem, mit einem Computerprogramm entwickelt zum Ausrechnen des Wiederbestellungspunktes oder des maximalen Vorratsniveaus MSL, **gekennzeichnet durch** die Verwendung der einzelnen nachgefragten Mengeverteilungen (A1, B1) für jedes Item in dem Inventar zur Bestimmung des Wiederbestellungspunktes oder, abhängig der Wiederbestellungspolitik, des maximalen Vorratsniveaus MSL für periodische Revisionen.

2. System, entwickelt für die Berechnung von optimalen Steuerungsparametern zur Verwendung in einem auf einen Computer gegründeten Inventarverwaltungssystem nach Anspruch 1, **gekennzeichnet durch** die Verwendung der einzelnen nachgefragten Mengeverteilungen für jedes Item in dem Inventar zur Bestimmung des Wiederbestellungspunktes oder, abhängig von der Wiederbestellungspolitik, des maximalen Vorratsniveaus MSL für periodische Revisionen mit Hilfe der Vergleichungen

$$E(R) = A1 \times E(L) \times E(Q)$$

und

$$Var(R) = A2 \times E(L) \times Var(Q) + A3 \times E(L) \times E(Q)^2 + A4^2 \times E(Q)^2 \times Var(L)$$

worin

| | |
|---|---|
| Aj | Parameter abhängig von der Verteilungsfunktion von Tj |
| Tj | Zeit verrannen zwichen der (j-1)-de und der j-de Nachfrage |
| L | die Herstellungsperiode, Wiederbestellungsperiode oder Produktionsperiode |
| R | Verbrauch in Einheiten während L |
| Q(i) | Menge innerhalb der i-Einzelnachfrage während der Herstellungsperiode |
| E(R) | erwarteter Verbrauch des Items während L |
| E(L) | erwarteter Wert von L |
| E(Q) | erwarteter Wert von Q für jede Nachfrage i |
| Var(R) | Varianz von R |
| Var(Q) | Varianz von Q |
| Var(L) | Varianz von L |

3. System nach Anspruch 2, **dadurch gekennzeichnet dass** die Verteilung Tj exponentiell ist, in welchem Fall A1 = A2 = A3 = A4.

4. System nach Anspruch 2 oder 3, **dadurch gekennzeichnet dass** Gewichte wq verwendet werden zur Genauigkeitsverbesserung in Übereistimmung mit

$$E(Q) = \Sigma\ wq \times Qj\ /\ \Sigma\ wq$$

und

$$Var(Q) = \Sigma\ wq \times (Qj - E(Q))^2\ /\ \Sigma\ wq$$

5. System entwickelt für die Berechnung von optimalen Steuerungsparametern zur Verwendung in einem auf einen Computer gegründeten Inventarverwaltungssystem nach Anspruch 1, **gekennzeichnet durch** die Verwendung der einzelnen nachgefragten Mengeverteilungen für jedes Item in dem Inventar zur Bestimmung des Wiederbestellungspunkt ROP oder, abhängig von der Wiederbestellungspolitik, des maximalen Vorratsniveaus MSL für periodische Revisionen mit Hilfe der Vergleichungen

$$P(R) = \sum_{j=0}^{n} wj \quad x \quad Pj(R)$$

worin

R  Verbrauch in Einheiten während der Herstellungsperiode, Wiederbestellungsperiode oder Produktionsperiode

P(R) die Wahrscheinlichkeitsfunktion von R

P(Q) die Wahrscheinlichkeitsfunktion von Menge Q für jede Nachfrage i

Pj(R) die j-de Eigenkonvolution von P(Q) (die gesamte Wahrscheinlichkeit für die totale Menge der j Nachfragen)

wj  das statistische Gewicht der übereinstimmenden gesamten Wahrscheinlichkeitsfunktion für 1 .... n simultane Nachfragen während Produktionsperiode $L_H$

wonach die Herbestellungsmenge jetzt wie folgt ausgerechnet wird:

$$SL(ROP) = \int_{O}^{ROP} P(R)dR$$

**6.** System entwickelt für die Berechnung von optimalen Steuerungsparametern zur Verwending in einem auf einen Computer gegründeten Inventarverwaltungssystem nach Anspruch 1, **gekennzeichnet durch** die Verwendung der einzelnen nachgefragten Mengeverteilungen für jedes Item in der Inventar zur Bestimmung des Wiederbestellungspunkt ROP oder, abhängig von der Wiederbestellungspolitik, des maximalen Vorratsniveaus MSL für periodische Revisionen mit Hilfe der Vergleichungen

$$SL(ROP) = \sum_{j=1}^{n} wj \quad x \quad Fj(ROP)$$

worin

SL(ROP) Serviceniveau als Funktion von der ROP

Fj (ROP) die kumulative Verteilungsfunktion von Rj

**7.** System entwickelt für die Berechnung von optimalen Steuerungsparametern zur Verwendung in einem auf einen Computer gegründeten Inventarverwaltungssystem nach Anspruch 1, **gekennzeichnet durch** die Verwendung der einzelnen nachgefragten Mengeverteilungen für jedes Item in der Inventar zur Bestimmung des Wiederbestellungspunktes oder, abhängig von der Wiederbestellungspolitik, des maximalen Vorratsniveaus MSL für periodische Revisionen mit Hilfe der Vergleichungen

$$L(R) = \sum_{j=1}^{n} wj \quad x \quad \left[L(Q)\right]^{j}$$

worin

L(Q) die Fourier Transformation von P(Q)

L(R) die Fourier Transformation von P(R)

nachdem P(R) entsteht aus der einmahligen Rücktransformation:

$$P(R) = \text{Fourier Transformation} ( L(R) )$$

nachdem die Wiederbestellungsmenge wird ausgerechnet in Übereinstimmung mit:

$$SL(ROP) = \int_{0}^{ROP} P(R)dR$$

**8.** System entwickelt für die Berechnung von optimalen Steuerungsparametern zur Verwendung in einem auf einen Computer gegründeten Inventarverwaltungssystem nach Anspruch 7, **gekennzeichnet durch** die Verwendung eines Gewichtsfaktors wL:

$$L(R) = \sum_{j=1}^{n} wj \ \times \ \left[ wL \ \times \ L(Q) \right]^{j}$$

worin

L(Q)    die Fourier Transformation von P(Q)
L(R)    die Fourier Transformation von P(R)
wL      Gewichtsfaktor in dem reziproken Raum

nachdem P(R) entsteht aus der einmahligen Rücktransformation:

$$P(R) = \text{Fourier Transformation} (L(R))$$

**9.** System entwickelt für die Berechnung von optimalen Steuerungsparametern zur Verwendung in einem auf einen Computer gegründeten Inventarverwaltungssystem worin die Berechnung stattfindet in Übereinstimmung mit den Ansprüchen 1-8 für eine Anzahl von Faktoren, Kategorien oder Gebieten wie zum Beispiel die 4 Jahreszeiten, die 2 Seksen oder eine Anzahl von Ältersklassen.

**Revendications**

**1.** Un système de contrôle adapté pour déterminer les paramètres de contxôle optimaux en vue de leur utilisation dans un système d'inventaire assisté par ordinateur, le système de contrôle comprend un programme informatique étudié pour calculer le point de réapprovisionnement du niveau de stock maximum MSL (NSM) et **caractérisé par** un calcul utilisant la distribution de la quantité de chaque simple demande pour chaque article de l'inventaire dans le but de déterminer le point de réapprovisionnement ou, dépendant de la politique de réapprovisionnement, le niveau de stock maximum MSL pour revues périodiques.

**2.** Système étudié pour le calcul de paramètres de contrôle optimaux en vue de leur utilisation dans un système d'inventaire assisté par ordinateur, selon la revendication 1, **caractérisé par** l'utilisation de la distribution de la quantité de chaque simple demande pour chaque article de l'inventaire dans le but de déterminer le point de réapprovisionnement ou, dépendant de la politique de réapprovisionnement, le niveau de stock maximum MSL pour revues périodiques utilisant la formule:

$$E(R) = A1 \times E(L) \times E(Q)$$

et

$$Var(R) = A2 \times E(L) \times Var(Q) + A3 \times E(L) \times E(Q)^2 + A4^2 \times E(Q)^2 \times Var(L)$$

où

Aj         paramètre dépendant de la fonction de distribution de Tj
Tj         Temps écoulé entre la (j-1)-ième et la j-ième demande
L         Le temps de commande, le temps de réapprovisionnement ou le temps de production
R         Consommation en unités sur L
Q(i)         Quantité de la i-ième simple demande pendant le temps de commande
E(R)         Consommation attendue de l'article sur L
E(L)         Valeur attendue de L
E(Q)         Valeur attendue pour Q pour toute demande i
Var(R)         Variance de R
Var(Q)         Variance de Q
Var(L)         Variance de L

3. Système , selon à la revendication 2, **caractérisé par le fait que** la distribution Tj est exponentielle dans le cas où A1 = A2 = A3 = A4

4. Système , conformément aux revendications 2 ou 3, **caractérisé par le fait qu'**il utilise une pondération wq pour améliorer la précision s'y rapportant

$$E(Q) = \Sigma \, wq \times Qj \, / \, \Sigma \, wq$$

et

$$Var(Q) = \Sigma \, wq \times (Qj - E(Q))^2 \, / \, \Sigma \, wq$$

5. Système étudié pour le calcul de paramètres de contrôle optimaux en vue de leur utilisation dans un système d'inventaire assisté par ordinateur, selon la revendication 1, **caractérisé par** l'utilisation de la distribution de la quantité de chaque simple demande pour chaque article de l'inventaire dans le but de déterminer le point de réapprovisionnement ROP ou, dépendant de la politique de réapprovisionnement, le niveau de stock maximum MSL pour revues périodiques utilisant la formule

$$P(R) = \sum_{j=0}^{n} wjxPj(R)$$

où

R         Consommation en unités sur le temps de commande, le temps de réapprovisionnement ou le temps de production
P(R)         La fonction de probabilité de R
P(Q)         La fonction de probabilité de la quantité Q pour toute demande i
Pj(R)         La j-ième auto-convergence de P(Q) (la probabilité réunie pour la quantité totale de j demandes)
wj         Le poids statistique de la fonction de probabilité réunie correspondante pour 1 .... n demandes simultanées pendant le temps de commande $L_H$ après lequel la quantité de réapprovisionnement est maintenant calculée selon:

$$SL(ROP) = \int_{O}^{ROP} P(R)dR$$

**6.** Système étudié pour le calcul de paramètres de contrôle optimaux en vue de leur utilisation dans un système d'inventaire assisté par ordinateur, selon la revendication 1, **caractérisé par** l'utilisation de la distribution de la quantité de chaque simple demande pour chaque article de l'inventaire dans le but de déterminer le point de réapprovisionnement ROP ou, dépendant de la politique de réapprovisionnement, le niveau de stock maximum MSL pour revues périodiques utilisant la formule

$$SL(ROP) = \sum_{j=1}^{n} wj \; x \; Fj(ROP)$$

où

SL(ROP)    Niveau de service fonction du ROP
Fj (ROP)    La fonction de distribution cumulative de Rj

**7.** Système étudié pour le calcul de paramètres de contrôle optimaux en vue de leur utilisation dans un système d'inventaire assisté par ordinateur, selon la revendication 1, **caractérisé par** l'utilisation de la distribution de la quantité de chaque simple demande pour chaque article de l'inventaire dans le but de déterminer le point de réapprovisionnement ou, dépendant de la politique de réapprovisionnement, le niveau de stock maximum MSL pour revues périodiques utilisant la formule

$$L(R) = \sum_{j=1}^{n} wj \; x \; \left[L(Q)\right]^{j}$$

où

L(Q)    La transformation de Fourier de P(Q)
L(R)    La transformation de Fourier de P(R)

après lequel P(R) est en situation de rétro-transformer le résultat une seule fois:

P(R) = Transforme Fourier ( L(R) )

d'où la quantité de réapprovisionnement est calculée selon:

$$SL(ROP) = \int_{0}^{ROP} P(R)dR$$

**8.** Système étudié pour le calcul de paramètres de contrôle optimaux en vue de leur utilisation dans un système d'inventaire assisté par ordinateur, selon la revendication 7, **caractérisé par** l'utilisation d'un facteur de pondération wL:

$$L(R) = \sum_{j=1}^{n} wj \ x \left[ wL \ x \ L(Q) \right]^{lj}$$

où

L(Q)   La transformation de Fourier de P(Q)
L(R)   La transformation de Fourier de P(R)
wL     facteur de pondération dans l'espace réciproque

après lequel P(R) est en situation de rétro-transformer le résultat une seule fois:

P(R) = Transforme Fourier ( L(R) ).

**9.** Un système de contrôle adapté pour déterminer les paramètres de contrôle optimaux en vue de leur utilisation dans un système d'inventaire assisté par ordinateur, où le calcul est effectué selon les revendications 1-8, pour un nombre de facteurs, catégories ou domaines, comme les 4 saisons, les 2 sexes, ou un nombre de classes d'âge.

**Figure 1**

**Figure 2**

**Figure 3**

**Figure 4**

NORMAL PROBABILITY DISTRIBUTION

## Figure 5

A demand for a quantity q is represented by a bar, the length of the bar is proportional to the quantity. The total demand D within a given period is represented by a box.

## Figure 6

Two different patterns of demand A1 and B1 are represented below, together with the presentation of the demand sampled in periodic intervals in A2 and B2.

## Figure 7

A small shift of the period of sampling of the same pattern may lead to radically different estimates

## Figure 8

Historical
Frequency N

1

Q

Weighted
Frequency

Wq

Q

P(Q)

Q

**Figure 9**